(19) Europäisches Patentamt
European Patent Office
Office européen des brevets

(11) **EP 4 108 973 B1**

(12) **EUROPEAN PATENT SPECIFICATION**

(45) Date of publication and mention
of the grant of the patent:
**10.09.2025 Bulletin 2025/37**

(21) Application number: **21791698.0**

(22) Date of filing: **19.04.2021**

(51) International Patent Classification (IPC):
**F16M 11/24** *(2006.01)*     **F16M 11/20** *(2006.01)*

(52) Cooperative Patent Classification (CPC):
**F16M 11/24; F16M 11/2092;** F16M 2200/044;
F16M 2200/063

(86) International application number:
**PCT/CN2021/088201**

(87) International publication number:
**WO 2021/213342 (28.10.2021 Gazette 2021/43)**

(54) **DISPLAY SUPPORT HAVING FREELY ADJUSTABLE HEIGHT**

ANZEIGETRÄGER MIT FREI VERSTELLBARER HÖHE

SUPPORT D'ÉCRAN À HAUTEUR LIBREMENT RÉGLABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2020 CN 202020590439 U
28.06.2020 CN 202010599396**

(43) Date of publication of application:
**28.12.2022 Bulletin 2022/52**

(73) Proprietor: **Ningbo Tuotuo River Design Company
Ningbo City, Zhejiang Province (CN)**

(72) Inventors:
• **ZHENG, Yujie
Ningbo, Zhejiang 315100 (CN)**
• **YOU, Xiaodong
Ningbo, Zhejiang 315100 (CN)**

(74) Representative: **Berggren Oy
P.O. Box 16
Eteläinen Rautatiekatu 10A
00101 Helsinki (FI)**

(56) References cited:
EP-A- 1 158 238     CN-A- 106 195 559
CN-A- 106 195 559     CN-A- 111 609 277
CN-U- 202 181 177     CN-U- 203 907 174
CN-U- 208 652 050     CN-U- 212 226 488
CN-U- 213 145 812     GB-A- 2 294 632
US-A- 5 799 917     US-A- 6 012 693
US-A1- 2004 084 587     US-A1- 2005 284 991
US-A1- 2006 157 627     US-A1- 2007 040 084
US-A1- 2008 054 133     US-A1- 2011 147 546
US-A1- 2014 077 048     US-A1- 2019 178 440
US-B1- 6 592 090     US-B1- 9 657 889
US-B2- 7 510 155

**Description**

**Technical** Field

The present disclosure relates to the technical field of display supports, and relates to a display support having freely adjustable height.

Background

In a related art, a display support having freely adjustable height mainly uses an air spring structure or a mechanical spring structure to realize height adjustment. An air spring display support has the disadvantages of high cost, short life, hidden danger of oil leakage, potential safety hazards, and non-environmental protection (due to disposal difficulty after being scrapped), but has a stable air spring force, thereby having better experience in free height adjustment. The air spring display support still dominates at present.

A mechanical spring display support has the advantages of low cost, long life, safety and environmental protection, etc. However, the free height adjustment of the known display with mechanical spring relies too much on friction to achieve balance, such that the experience is worse.

Therefore, there is a need for a display support with mechanical spring that provides an experience comparable to, or even better than, the air spring support in terms of free height adjustment.

US 2007/040084 A1 refers to a support arm assembly.

Summary

The present disclosure provides a display support having freely adjustable height according to claim 1. Some features of optional or preferred embodiments are recited in the dependent claims.

The main purpose of the present disclosure is to solve the above problems, and provide a display support with mechanical spring that is convenient to install and can be stopped after height adjustment.

According to an aspect of the embodiments of the present disclosure, a display support having freely adjustable height is provided. The display support includes a base and a connector for installing a display, an upper connecting arm and a lower connecting arm, which are parallel to each other, are arranged between the base and the connector, and a quadrilateral structure is formed among a hinge point between the upper connecting arm and the connector, the connector, a hinge point between the lower connecting arm and the connector, the lower connecting arm, a hinge point between the lower connecting arm and the base, the base, a hinge point between the upper connecting arm and the base, and the upper connecting arm; and

the display support further includes a mechanical spring, wherein an end of the mechanical spring is hinged with the connector or the lower connecting arm, an other end of the mechanical spring is hinged with a threaded sliding block, the threaded sliding block sleeves on a threaded rod, the threaded rod is arranged in the base, so that when an end part of the threaded rod is operated to drive the threaded rod to rotate, the threaded sliding block is movable along the threaded rod, and a position of the threaded sliding block on the threaded rod can be adjusted according to a weight of the display on the connector, so that when the connector is moved upwards or downwards, the connector can be stopped at different heights relative to the base.

In the display support having freely adjustable height according to the embodiments of the present disclosure, free stop of height adjustment is realized by using the mechanical spring, and thus is better than an air spring support.

In some embodiments, the display support satisfies a first balance condition and a second balance condition, wherein the first balance condition is: maintaining the connector at any height within a preset height range, driving the threaded sliding block to move by driving the threaded rod to rotate, and ensuring that a gravitational torque M1 is equal to an elastic torque M2, so as to adapt to a display of any weight within a preset weight range; and the second balance condition is: according to the first balance condition, maintaining a position of the threaded sliding block on the threaded rod corresponding to the weight of the display, and when the height of the connector is arbitrarily changed within the preset height range, ensuring that the gravitational torque M1 is equal to the elastic torque M2, so that the connector is able to stop at different heights relative to the base.

In some embodiments, the threaded rod is configured to be consistent with a movement trajectory of the threaded sliding block, the movement trajectory of the threaded sliding block is a line segment formed by connecting a point $e_0$ and a point $f_0$ within a range of a quadrilateral $e_1f_1f_2e_2$, the range of the quadrilateral $e_1f_1f_2e_2$ is formed by translating the line segment ef upwards and downwards for 5mm in a direction perpendicular to the line segment ef to obtain line segments $e_1f_1$ and $e_2f_2$, respectively, a point e and a point f are respectively intersection points of a circle C with a straight line La and a straight line Lb, a connecting point between the mechanical spring and the connector or the lower connecting arm is taken as a center of circle of the circle C, a length L1 of the mechanical spring when the connector is at a preset maximum height is taken as a radius of the circle C, and the straight lines La and Lb are respectively straight lines where the mechanical spring is located when an included angle b between the mechanical spring and the upper connecting arm or the lower connecting arm is at a maximum value and a minimum value.

In some embodiments, an included angle between the threaded rod and a horizontal direction away from the connector is 0-80°.

In some embodiments, when the connector is at a preset maximum height, a length $L_1$ of the mechanical spring is set to be L-x, wherein L represents a distance from a connecting point between the mechanical spring and the connector or the lower connecting arm to a hinge point between the lower connecting arm and the base, and x is -10 mm to 30 mm.

In some embodiments, when the connector is maintained at any horizontal height within a preset height range, according to a maximum value and a minimum value of the preset weight range of the display, a maximum value and a minimum value of an included angle b between the mechanical spring and the upper connecting arm or the lower connecting arm are obtained.

In some embodiments, an elastic coefficient K of the mechanical spring is Kmin to Kmax, wherein Kmax-Kmin≤15, and Kmin and Kmax are obtained by the following formula:

$$K=(\frac{Gcos(a1)}{sin(b1)}-\frac{Gcos(a2)}{sin(b2)})/(L1-L1')$$

wherein G represents a weight of the display;

a1 and a2 respectively represent angles between the upper connecting arm or the lower connecting arm and a horizontal plane when the connector is at two arbitrary heights within a preset height range;

b1 and b2 represent included angles between the mechanical spring and the upper connecting arm or the lower connecting arm, corresponding respectively to a1 and a2; and

L1 and L1' represent lengths of the mechanical spring, corresponding respectively to a1 and a2.

In some embodiments, an end of the threaded rod is configured as an operating end, and an other end of the threaded rod is rotatably arranged in a mounting seat, so that the threaded rod is driven to rotate by applying a force to the operating end of the threaded rod.

In some embodiments, the display support includes an adjusting rod, an end of the adjusting rod is hinged with the connector or the lower connecting arm, an other end of the adjusting rod is in threaded connection with an end of the mechanical spring, and when an end part of the adjusting rod is operated to drive the adjusting rod to rotate, the mechanical spring is driven to be extended and compressed, so as to adjust an elastic force of the mechanical spring and adapt to a display within a preset weight range.

According to another aspect of the embodiments of the present disclosure, a display support having freely adjustable height is provided. The display support includes a base and a connector for installing a display, an upper connecting arm and a lower connecting arm, which are parallel to each other, are arranged between the base and the connector, a parallelogram structure is formed among a hinge point between the upper connecting arm and the connector, the connector, a hinge point between the lower connecting arm and the connector, the lower connecting arm, a hinge point between the lower connecting arm and the base, the base, a hinge point between the upper connecting arm and the base, and the upper connecting arm, wherein the display support further includes an elastic force balance mechanism, an end of the elastic force balance mechanism is hinged with the upper connecting arm, an other end of the elastic force balance mechanism is hinged with the connector, and an elastic force of the elastic force balance mechanism can be adjusted according to the display on the connector, so that when the connector is moved upwards or downwards, the connector can be stopped at different heights relative to the base.

In some embodiments, the elastic force balance mechanism includes an elastic member and an adjusting rod, one end of the adjusting rod is hinged with the upper connecting arm, an other end of the adjusting rod is in threaded connection with one end of the elastic member, an other end of the elastic member is connected to the connector, and when the end part of the adjusting rod is operated to drive the adjusting rod to rotate, the elastic member is driven to be extended and compressed, so as to make the elastic force of the elastic member match the weight of the display on the connector.

In some embodiments, an end part of the upper connecting arm is provided with an operating hole, an end part of the adjusting rod is installed in the operating hole, and the end part of the adjusting rod is operated through the operating hole.

In some embodiments, both the upper connecting arm and the lower connecting arm are hinged with the base and the connector by connecting shafts and shaft holes matching the connecting shafts, respectively.

By using the display support having freely adjustable height according to the present disclosure, and on the basis of the configuration position of the elastic force balance mechanism relative to the parallelogram structure, free stop during height adjustment can be realized. Moreover, the display support has few parts, a simple structure, a lower cost and a beautiful appearance.

## Brief Description of the Drawings

To illustrate technical solutions in the embodiments of the present disclosure and in the prior art more clearly, a brief introduction on the drawings which are needed in the description of the embodiments and the prior art is given below. Apparently, the drawings in the description below are merely some of the embodiments of the present disclosure, based on which other drawings can be obtained by those of ordinary skill in the art without any creative effort.

Fig. 1 is an exploded schematic diagram of a display support having freely adjustable height according to some embodiments of the present disclosure.

Fig. 2 is a cross-sectional view of a first state of the display support having freely adjustable height according to some embodiments of the present disclosure.

Fig. 3 is a cross-sectional view of a second state of the display support having freely adjustable height according to some embodiments of the present disclosure.

Fig. 4 is a first simplified diagram of the display support having freely adjustable height according to some embodiments of the present disclosure.

Fig. 5 is a second simplified diagram of the display support having freely adjustable height according to some embodiments of the present disclosure.

Fig. 6 is another structural schematic diagram of the display support having freely adjustable height according to some embodiments of the present disclosure

Fig. 7 is a third structural schematic diagram of the display support having freely adjustable height according to some embodiments of the present disclosure.

Fig. 8 is another exploded schematic diagram of the display support having freely adjustable height according to some embodiments of the present disclosure.

Fig. 9 is a cross-sectional view of a first position of the display support having freely adjustable height according to some embodiments of the present disclosure.

Fig. 10 is a simplified diagram of the display support having freely adjustable height shown in Fig. 9.

Fig. 11a is a cross-sectional view of a second position of the display support having freely adjustable height according to some embodiments of the present disclosure.

Fig. 11b is a simplified diagram of the display support having freely adjustable height shown in Fig. 11a.

Fig. 12a is a cross-sectional view of a third position of the display support having freely adjustable height according to some embodiments of the present disclosure.

Fig. 12b is a simplified diagram of the display support having freely adjustable height shown in Fig. 12a.

## Detailed Description of the Embodiments

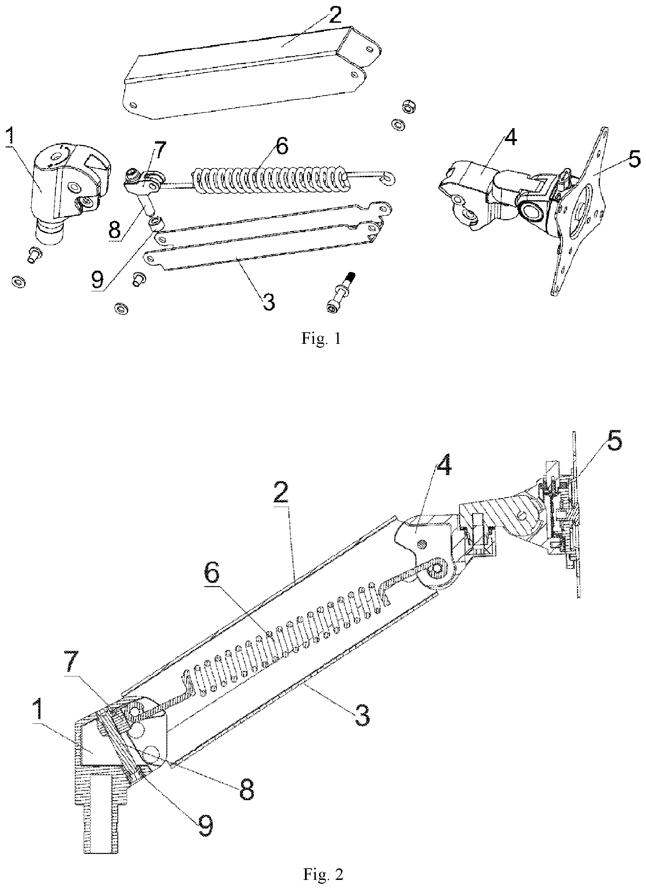

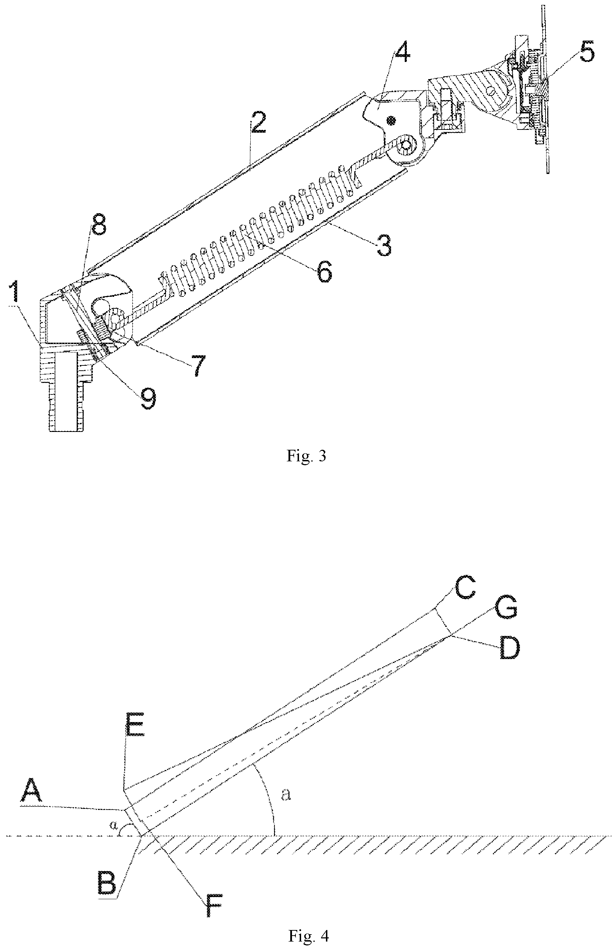

In order that the purposes, technical solutions and advantages of the present disclosure are clearer, a further detailed description of the present disclosure will be given below with reference to the drawings and in combination with embodiments. Apparently, the embodiments described below are merely a part, but not all, of the embodiments of the present disclosure. All of other embodiments, obtained by those of ordinary skill in the art based on the embodiments in the present disclosure without any creative effort, fall into the protection scope of the present disclosure.
As shown in Fig. 1 to Fig. 6, one aspect of the embodiments of the present disclosure provides a display support having freely adjustable height, wherein the display support includes a base 1 and a connector 4 for installing a display, the display is fixed to the connector 4 by a mounting plate 5, an upper connecting arm 2 and a lower connecting arm 3, which are parallel to each other, are arranged between the base 1 and the connector 4, and as shown in Fig. 4, a quadrilateral structure ABDC is formed among a hinge point C between the upper connecting arm 2 and the connector 4, the connector 4, a hinge point D between the lower connecting arm 3 and the connector 4, the lower connecting arm 3, a hinge point B between the lower connecting arm 3 and the base 1, the base 1, a hinge point A between the upper connecting arm 2 and the base 1, and the upper connecting arm 2.

As shown in Fig. 1 to Fig. 3, the display support further includes a mechanical spring 6, one end of the mechanical spring 6 is hinged with the connector 4, the other end of the mechanical spring 6 is hinged with a threaded sliding block 7, the threaded sliding block 7 sleeves on a threaded rod 8, and the threaded rod 8 is arranged in the base 1. One end of the threaded rod 8 is configured as an operating end 9, and the other end of the threaded rod 8 is rotatably arranged in the base 1, so that the threaded rod 8 is driven to rotate by applying a force to the operating end 9 of the threaded rod 8. When an end part of the threaded rod 8 is operated to drive the threaded rod 8 to rotate, the threaded sliding block 7 moves along the threaded rod 8. As shown in Fig. 2, at this time, the threaded sliding block 7 is at a highest end of the threaded rod 8; and as shown in Fig. 3, the threaded sliding block 7 is at a lowest end of the threaded rod 8, and the threaded sliding block 7 is movable between the highest end and the lowest end of the threaded rod 8 by operating the threaded rod 8.

The position of the threaded sliding block 7 on the threaded rod 8 can be adjusted according to the weight of the display on the connector 4, so that when the connector 4 is moved upwards or downwards, the connector 4 can be stopped at different heights relative to the base 1.

According to the invention, one end of the mechanical spring 6 is hinged with the connector 4 and is also hinged with the lower connecting arm 3.

In the embodiments provided by the present disclosure, one end of the mechanical spring 6 is hinged to the connector 4, the other end is hinged with the threaded sliding block 7, the threaded sliding block 7 is in threaded connection with the threaded rod 8, and the mechanical spring 6, the threaded sliding block 7 and the threaded rod 8 are all installed on the base 1. As shown in Fig. 2 and Fig. 3, the mechanical spring 6 is in an extended state. The threaded rod 8 can be rotated with a hexagon wrench, so that the threaded sliding block 7 moves up and down on the threaded rod 8, and an angle between the mechanical spring 6 and the upper connecting arm 2 or between the mechanical spring 6 and the lower connecting arm 3 is changed, so as to realize free stop at different bearing heights. The sliding range of the threaded sliding block 7 and an installation position of the corresponding threaded rod 8 can be designed to realize the free stop of the display within a required load-bearing range.

Therefore, in order to realize the free stop of the display within the required load-bearing range, the display support provided by the present disclosure simultaneously satisfies the following balance conditions:

First balance condition: maintaining the connector 4 at any height within a preset height range, driving the threaded sliding block 7 to move by driving the threaded rod 8 to rotate, and ensuring that a gravitational torque M1 is equal to an elastic torque M2, so as to adapt to a display of any weight within a preset weight range.

Second balance condition: according to the first balance condition, maintaining the position of the threaded sliding block 7 on the threaded rod 8 corresponding to the weight of the display, and when the height of the connector 4 is arbitrarily changed within the preset height range, ensuring that the gravitational torque M1 is equal to the elastic torque M2, so that the connector 4 can be stopped at different heights relative to the base 1.

For the first balance condition, as shown in Fig. 4, the connector 4 is maintained at any height within the preset height range, that is, an angle a between the upper connecting arm 2 or the lower connecting arm 3 and the horizontal plane is unchanged. At this time, in order to adapt to a display of any weight within the preset weight range, the threaded rod 8 can be rotated with the hexagon wrench, so that the threaded sliding block 7 moves up and down on a special screw rod, that is, the threaded sliding block 7 moves on the threaded rod 8 in a length direction of the threaded rod 8, so as to change a position of the threaded sliding block 7 on the threaded rod 8, that is, to change an angle b between the mechanical spring 6 and the upper connecting arm 2 or the lower connecting arm 3.

The gravitational torque M1=GL·cos(a), the elastic torque M2=F·L·sin(b), and the gravitational torque is the same as the elastic torque. L represents the length of the upper connecting arm 2 or the lower connecting arm 3, G

$$G = \frac{F\sin(b)}{\cos(a)}$$

represents the gravity, and F represents an elastic force, then . Since the angle a is constant, the elastic force F is also constant. Therefore, when b is reduced, that is, the threaded sliding block 7 slides down, G is reduced, that is, the weight of the display is reduced. Therefore, for the display within the preset weight range, the weight is reduced. When b is smaller, it indicates that the position of the threaded sliding block 7 on the threaded rod 8 is lower. As shown in Fig. 4, a point E is the highest point of the threaded sliding block 7, and at this time, the angle b between the mechanical spring 6 and the upper connecting arm 2 or the lower connecting arm 3 is the maximum; and a point F is the lowest point of the threaded sliding block 7, and at this time, the angle b between the mechanical spring 6 and the upper connecting arm 2 or the lower connecting arm 3 is the minimum.

For the second balance condition, the weight of the display is constant, the position of the threaded sliding block 7 on the threaded rod 8 is constant, when the position of the display is adjusted in a vertical direction, that is, the angle a can be arbitrarily changed within a preset angle range, and during this process, the gravitational torque M1 is equal to the elastic torque M2 as well.

It is assumed that, a preset range of the angle a is (33°, -33°), when the angle a changes from 33° to -33°, since the mechanical spring 6 is extended all the time, the elastic force F is constantly increasing, accordingly, to make M1=M2, the angle b between the mechanical spring 6 and the upper connecting arm 2 or the lower connecting arm 3 needs to be continuously reduced, so as to ensure that the torque M2 provided by the elastic force is basically constant.

Therefore, according to the preset weight range and the preset height range/the preset angle range, a corresponding configuration position of the threaded rod 8 or a movement trajectory of the threaded sliding block 7 is obtained by calculation.

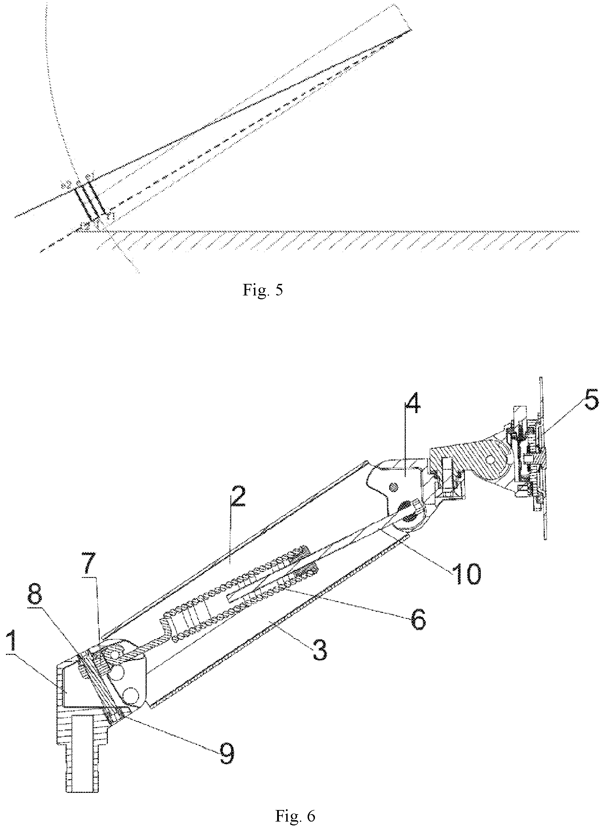

As shown in Fig. 5, based on the first balance condition and the second balance condition, a preliminary movement trajectory of the threaded sliding block 7 is determined, that is, with a connecting point G of the mechanical spring 6 on the connector 4 as a center of circle, and with the length L1 of the mechanical spring 6 when the connector 4 is at a preset maximum height as a radius, a circle C is drawn. When the included angle b between the mechanical spring 6 and the upper connecting arm 2 or the lower connecting arm 3 is at a maximum value and a minimum value, straight lines La and Lb passing through the point G are respectively formed, intersection points of the circle C with the straight lines La and Lb form a point e and a point f respectively, a line segment ef is translated upwards and downwards for 5mm in a direction perpendicular to the line segment ef to obtain line segments $e_1f_1$ and $e_2f_2$, respectively, and a movement trajectory range of the threaded sliding block 7 is formed, that is, a quadrilateral $e_1f_1f_2e_2$.

When the connector 4 is maintained at any horizontal height within the preset height range, according to the maximum value and the minimum value of the preset weight range of the display, the maximum value and the minimum value of the included angle b between the mechanical spring 6 and the upper connecting arm 2 or the lower connecting arm 3 are obtained, that is, according to the maximum value of the preset weight range of the display, the maximum value of the included angle b between the mechanical spring 6 and the upper connecting arm 2 or the lower connecting arm 3 is obtained; and according to the minimum value of the preset weight range of the display, the minimum value of the included angle b between the mechanical spring 6 and the upper connecting arm 2 or the lower connecting arm 3 is obtained.

That is to say, the movement trajectory of the threaded sliding block 7 is a line segment $e_0f_0$ formed by connecting two points in the quadrilateral $e_1f_1f_2e_2$, i.e., point $e_0$ and point $f_0$, and the threaded rod 8 is set to be consistent with the movement trajectory of the threaded sliding block 7. As shown in Fig. 4, in some embodiments of the present disclosure, the included angle $\alpha$ between the threaded rod 8 and a horizontal direction away from the connector 4 is 0-80°.

In order to further determine the movement trajectory of the threaded sliding block 7, the movement trajectory can be determined by an elastic coefficient of the mechanical spring 6. For the same spring, the stiffness K (the elastic coefficient) of the spring needs to be a fixed value or basically the same. Based on the condition that K=increment $\Delta F$ of a spring force/a deformation amount $\Delta X$ of the mechanical spring 6 is a fixed value or basically the same, the movement trajectory of the threaded sliding block 7 can be verified by the following formula, and the elastic coefficient of the mechanical spring 6 can be determined.

$$K=\left(\frac{G\cos(a1)}{\sin(b1)}-\frac{G\cos(a2)}{\sin(b2)}\right)/(L1-L1')$$

wherein G represents the weight of the display;

a1 and a2 respectively represent the angles between the upper connecting arm 2 or the lower connecting arm 3 and the horizontal plane when the connector 4 is at two arbitrary heights within the preset height range;

b1 and b2 represent the included angles between the mechanical spring 6 and the upper connecting arm 2 or the lower connecting arm 3, corresponding respectively to a1 and a2; and

L1 and L1' represent the lengths of the mechanical spring 6 obtained through actual measurement, corresponding respectively to a1 and a2.

By the above formula, a plurality of K values is obtained, the elastic coefficient K of the mechanical spring 6 is selected from Kmin to Kmax, wherein Kmax-Kmin≤15; and it can be verified whether any point of the line segment $e_0f_0$ satisfies the requirements, if not, the position can be adjusted slightly, and the verification can be performed again. The actually obtained point may float up and down, and the final drawn straight line is used as the movement trajectory of the threaded sliding block 7.

When the connector 4 is at the preset maximum height, the length L1 of the mechanical spring 6 is set to be L-x, wherein L represents a distance from a connecting point between the mechanical spring 6 and the connector 4 or the lower connecting arm 3 to a hinge point between the lower connecting arm 3 and the base 1, and x is -10 to 30 mm. In order to satisfy the second balance condition, when the preset angle/height range changes, theoretically, and when the angle a is the maximum, the length $L1 \geq L$ of the mechanical spring 6 can ensure that the angle b is constantly decreasing while rotating downwards. But in fact, the torque provided by the gravity is $M1=GL \cdot \cos(a)$, the gravity G is constant, in a starting stage, when the angle a changes from 33° to 0°, the gravitational torque M1 increases, but the change value is not large, especially in a second half of the section, due to a greater change in the elastic force, the change in the gravitational torque can be ignored, that is, it can be regarded as a fixed value. Therefore, the length L1 of the mechanical spring 6 is set to be L-x, and x is -10 to 30 mm.

In some embodiments, taking the display bearing 2-9 kg as an example, the angle a is set to change from 33° to -33°, and G is calculated as 30-100N including the own weight of the display, assuming that the elastic force F=700N, it can be obtained that the minimum value bmin is about 2°, and the maximum value bmax is about 7.5°; and L=240mm, x=5mm, L1 =235mm.

As shown in Fig. 6, the display support includes an adjusting rod 10, one end of the adjusting rod 10 is hinged with connector 4 or the lower connecting arm 3, the other end of the adjusting rod 10 is in threaded connection with one end of the mechanical spring 6, and when an end part of the adjusting rod 10 is operated to drive the adjusting rod 10 to rotate, the mechanical spring 6 is driven to be extended and compressed, so as to adjust an elastic force of the mechanical spring 6 and adapt to the display within the preset weight range.

If only the mechanical spring 6 is provided, when the display support is installed, the deformation amount of the mechanical spring 6 has been determined, then a tension of the mechanical spring 6 has been fixed in use, making it difficult to adjust; after the adjusting rod 10 is installed, the tension of the mechanical spring 6 can be adjusted, and specifically, the mechanical spring 6 can be controlled to be extended by rotating the adjusting rod 10, so as to change the magnitude of the elastic force; and by adjusting the magnitude of the elastic force, the weight range of the display can be set more flexibly. For example, if the elastic force is 700N, the weight range of the display is 2-9kg, and if the elastic force is adjusted to 800N, the weight range of the display can reach 3-11kg.

By using the display support having freely adjustable height according to the embodiments of the present disclosure, free stop of height adjustment is realized by using the mechanical spring 6, and thus is better than an air spring support. Since the display support is provided with the parallelogram structure, the height of the display installed on the connector 4 can be adjusted by adjusting the included angle between the upper connecting arm 2 or the lower connecting arm 3 and the horizontal plane. In addition, since the display support further includes the mechanical spring 6, the threaded sliding block 7 and the threaded rod 8, which can be rotated by operating the threaded rod 8 so as to drive the threaded sliding block 7 to move along the threaded rod 8, and since the mechanical spring 6 is hinged to the threaded sliding block 7, when the threaded sliding block 7 moves along the threaded rod 8, the length of the mechanical spring 6 changes, and the elastic force generated by the mechanical spring 6 also changes. The display fixed to the connector 4 can generate a clockwise gravitational torque on the connector 4, and the mechanical spring 6 can generate a counterclockwise elastic torque on the connector 4. Therefore, by the weight of the display, the magnitude of the elastic force is determined, so as to determine the deformation amount of the mechanical spring 6 and the position of the threaded sliding block 7 on the threaded rod 8, such that the gravitational torque and the elastic torque are the same. As a result, the two torques received by the display can cancel each other, and then the display can be fixed in position after being adjusted.

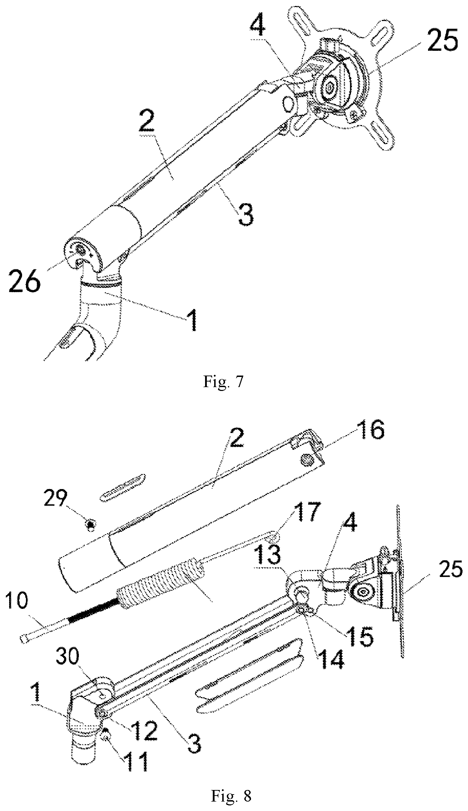

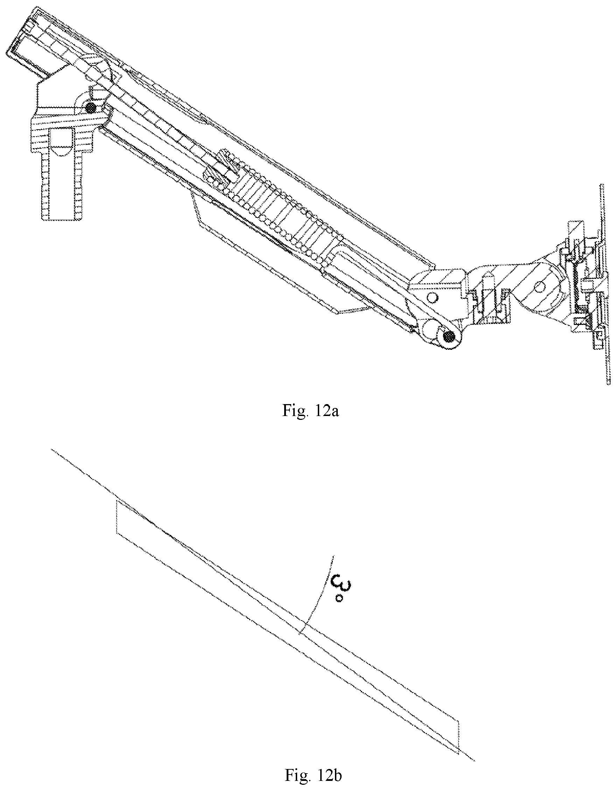

As shown in Fig. 7 to Fig. 12b, another aspect of the embodiments of the present disclosure provides a display support having freely adjustable height, wherein the display support includes a base 1 and a connector 4, the base 1 is installed on a supporting arm, and a connecting plate 25 is arranged on the connector 4, the connecting plate 25 is configured for installing a display.

As shown in Fig. 8, an upper connecting arm 2 and a lower connecting arm 3, which are parallel to each other, are arranged between the base 1 and the connector 4, and end parts of the upper connecting arm 2 and the lower connecting arm 3 are hinged with the base 1 and the connector 4, respectively.

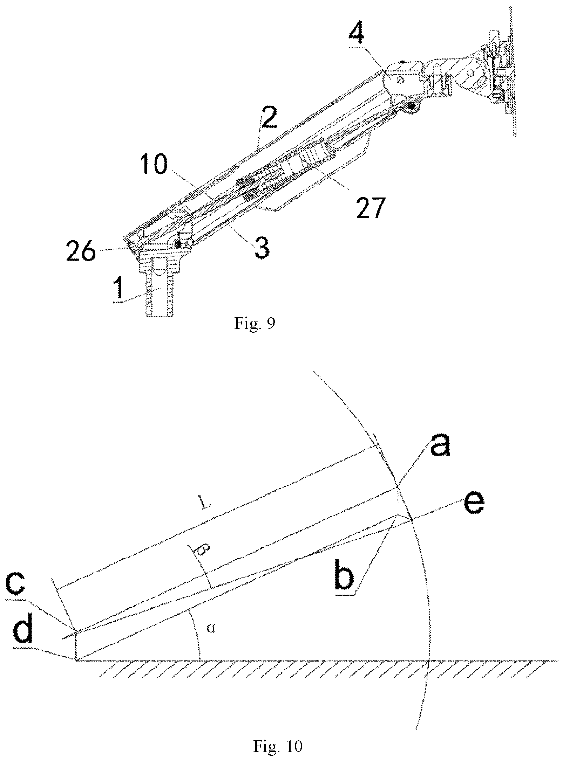

Fig. 10 is a simplified diagram of the display support shown in Fig. 9. As shown in Fig. 10, the end parts of the upper connecting arm 2 and the lower connecting arm 3 are hinged with the base 1 and the connector 4, respectively, forming four hinge points a, b, c and d, wherein the hinge point a is formed between the upper connecting arm 2 and the connector 4, the hinge point b is formed between the lower connecting arm 3 and the connector 4, the hinge point d is formed between the lower connecting arm 3 and the base 1, the hinge point c is formed between the upper connecting arm 2 and the base 1. The connector 4 is located between the hinge point a and the hinge point b, the base 1 is located between the hinge point c and the hinge point d, a parallelogram structure is formed among the upper connecting arm 2, the lower connecting arm 3, the base 1, the connector 4 and the four hinge points a, b, c and d, and the four hinge points a, b, c and d are four vertexes of the parallelogram structure.

Both the upper connecting arm 2 and the lower connecting arm 3 are hinged with the base 1 and the connector 4 by connecting shafts and shaft holes matching the connecting shafts, respectively. As shown in Fig. 8, the upper connecting arm 2 is hinged with the base 1 and the connector 4 by shaft holes 30,16 and connecting shafts 29, 13 and 11 matching the same; and the lower connecting arm 3 is hinged with the base 1 and the connector 4 by connecting shafts 12, 14 and corresponding shaft holes, respectively. Therefore, the connector 4 can be rotated around the base 1, so as to change the position of the connector 4.

As shown in Fig. 7 to Fig. 10, the display support further includes an elastic force balance mechanism, the elastic force balance mechanism includes an elastic member 27 and an adjusting rod 10, an end of the adjusting rod 10 is hinged with the upper connecting arm 2, the other end of the adjusting rod 10 is in threaded connection with an end of the elastic member 27, and the other end of the elastic member 27 is hinged with the connector 4. As shown in Fig. 10, the elastic member 27 and the connector 4 form a connecting point e.

Based on the parallelogram structure and the elastic force balance mechanism, the elastic force of the elastic force balance mechanism can be adjusted according to the weight of a display to be installed, so that when the connector 4 is moved upwards or downwards, the connector 4 can be stopped at different heights relative to the base 1. When the end part of the adjusting rod 10 is operated to drive the adjusting rod 10 to rotate, the elastic member 27 is driven to be extended and compressed, so that the elastic force of the elastic member 27 matches the weight of the display on the connector 4.

Specifically, the display fixed to the connector 4 can generate a clockwise gravitational torque on the connector 4, and the elastic force balance mechanism can generate a counterclockwise elastic torque on the connector 4. Therefore, according to the weight of the display, the magnitude of the elastic force of the elastic force balance mechanism is determined, such that the gravitational torque and the elastic torque are of the same magnitude. As a result, the two torques received by the display can cancel each other, and then the display can be fixed in position after being adjusted.

Therefore, when the product of the embodiments of the present disclosure is used, the elastic force of the elastic member 27 can be adjusted to adapt to heavy objects of different weights, such as a display. For example, when the installed heavy object is 1kg, a tool such as a wrench is used to rotate the adjusting rod 10, so that the elastic member 27 is extended to produce a certain deformation amount, until the elastic force of the elastic member 27 and the heavy object reach a balance. After reaching the balance, the display can be moved upwards or downwards to any position without falling down or rising up, that is, the display can be stopped at any height. When the heavy object to be installed is 10kg, similarly, it is also necessary to rotate the adjusting rod 10 to extend the elastic member 27, so as to produce a certain deformation amount, so that the elastic force of the elastic member 27 and the heavy object can reach a new balance.

Specifically, as shown in Fig. 7 and Fig. 10, the end part of the upper connecting arm 2 is provided with an operating hole 26, an end part of the adjusting rod 10 is installed in the operating hole 26, and the end part of the adjusting rod 10 is operated through the operating hole 26.

As shown in Fig. 8, the elastic member 27 can be installed on a mounting shaft 15 of the connector 4 by a mounting ring 17 at the end part thereof. For the specific position of the end part of the elastic member 27 on the connector 4 and the upper connecting arm 2, in the embodiment as shown in Fig. 10, the hinge point a and the hinge point b are located on the same vertical plane, the hinge point c and the hinge point d are located on the same plane, the connecting point e formed by the elastic member 27 and the connector 4 is located outside the vertical plane where the hinge point a and the hinge point b are located, and the connecting point between the adjusting rod 10 and the upper connecting arm 2 is located outside the vertical plane where the hinge point c and the hinge point d are located. The connecting point e formed by the elastic member 27 and the connector 4 is located diagonally below the hinge point b between the lower connecting arm 3 and the connector 4. Additionally, the connecting point e formed by the elastic member 27 and the connector 4 can be located at any other position of the connector 4, for example, located on the hinge point b between the lower connecting arm 3 and the connector 4, or diagonally above the hinge point b, etc.

As shown in Figure 10, it is provided that the length of the upper connecting arm 2 is L, the included angle between the elastic force balance mechanism and the upper connecting arm 2 is $\beta$, the included angle between the upper connecting arm 2 and the horizontal plane is $\alpha$, G represents the gravity, F represents the elastic force, and a circular arc represents a movement trajectory of the point a. Because the gravity is downward, for the heavy object, the direction of the torque provided by the gravity of the heavy object itself is clockwise, and the direction of the torque provided by the elastic member 27 for the heavy object is counterclockwise, therefore the directions of the two are opposite. Moreover, the torque provided by the gravity of the heavy object itself is $M1=GL\cdot\cos(\alpha)$, and the torque of tension provided by the elastic member 27 is $M2=F\cdot L\cdot\sin(\beta)$. Therefore, when M1=M2, the clockwise and counterclockwise torques are equal in magnitude and cancel each other, that is, the heavy object can be stopped at any height.

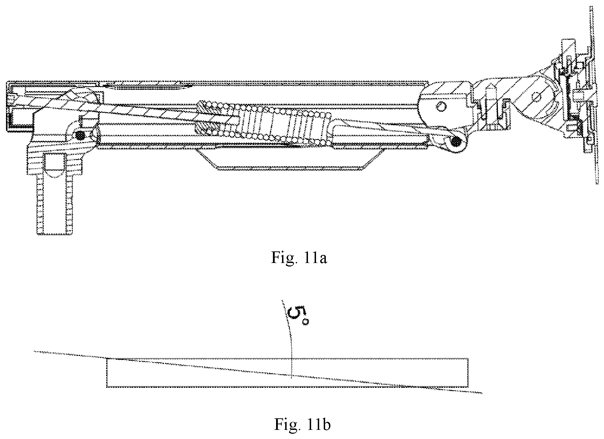

Based on the configuration position of the elastic force balance mechanism relative to the parallelogram structure in the embodiments of the present disclosure, as shown in Fig. 11a to Fig. 12b, after the display and the elastic force balance mechanism are adjusted to reach a balance, the display can be rotated up and down arbitrarily and stopped. During the upward and downward rotation process of the display, the elastic member 27 can be continuously extended, the elastic force increases, and the included angle $\beta$ between the elastic force balance mechanism and the upper connecting arm 2 decreases, changing from 6° to 5°, and then changing to 3°, so that the torque remains constant. In this way, during the upward and downward rotation process, the torque provided by the elastic member 27 is the same at any position, and free stop at any position is realized.

By using the display support having freely adjustable height according to the embodiments of the present disclosure, and based on the configuration position of the elastic force balance mechanism relative to the parallelogram structure, free stop during height adjustment can be realized. Moreover, the display support has few parts, a simple structure, a lower cost and a beautiful appearance.

It should be noted that, in this document, relational terms such as first and second are only used for distinguishing one entity or operation from another entity or operation, and do not necessarily require or imply the presence of any such an actual relationship or sequence between these entities or operations. Moreover, the terms "comprising", "including" or any other variations thereof are intended to cover non-exclusive inclusions, so that a process, a method, an article or a device including a series of elements not only include those elements, but also include other elements that are not explicitly listed or other elements inherent to such process, method, article or device. In the absence of further limitation, an element defined by the statement "including a ......" does not exclude the presence of additional identical elements in the process, method, article or device that includes the element.

**Claims**

1.  A display support having freely adjustable height, wherein the display support comprises a base (1) and a connector (4) for installing a display, wherein an upper connecting arm (2) and a lower connecting arm (3), which are parallel to each other, are arranged between the base (1) and the connector (4), and a quadrilateral structure (ABDC) is formed among a hinge point C between the upper connecting arm (2) and the connector (4), the connector (4), a hinge point D between the lower connecting arm (3) and the connector (4), the lower connecting arm (3), a hinge point B between the lower connecting arm (3) and the base (1), the base (1), a hinge point between A the upper connecting arm (2) and the base (1), and the upper connecting arm (2); and the display support further comprises a mechanical spring (6),

    wherein an first end of the mechanical spring (6) is hinged with the connector (4), an other end of the mechanical spring (6) is hinged with a threaded sliding block (7), the threaded sliding block (7) sleeves on a threaded rod (8), the threaded rod (8) is arranged in the base (1), so that when an end part of the threaded rod (8) is operated to drive the threaded rod (8) to rotate, the threaded sliding block (7) is movable along the threaded rod (8), and a position of the threaded sliding block (7) on the threaded rod (8) can be adjusted according to a weight of the display on the connector (4), so that when the connector (4) is moved upwards or downwards, the connector (4) can be stopped at different heights relative to the base (1);

    wherein the display support satisfies a first balance condition and a second balance condition, wherein the first balance condition is: maintaining the connector (4) at any height within a preset height range, driving the threaded sliding block (7) to move by driving the threaded rod (8) to rotate, and ensuring that a gravitational torque M1 is equal to an elastic torque M2, so as to adapt to a display of any weight within a preset weight range; wherein the second balance condition is: according to the first balance condition, maintaining a position of the threaded sliding block (7) on the threaded rod (8) corresponding to the weight of the display, and when the height of the connector (4) is arbitrarily changed within the preset height range, ensuring that the gravitational torque M1 is equal to the elastic torque M2, so that the connector (4) can be stopped at different heights relative to the base (1).

2.  The display support having freely adjustable height as claimed in claim 1, wherein the threaded rod (8) is configured to be consistent with a movement trajectory of the threaded sliding block (7), the movement trajectory of the threaded sliding block (7) is a line segment formed by connecting a point $e_0$ and a point $f_0$ within a range of a quadrilateral $e_1f_1f_2e_2$, the range of the quadrilateral $e_1f_1f_2e_2$ is formed by translating a line segment ef upwards and downwards for 5mm in a direction perpendicular to the line segment ef to obtain line segments $e_1f_1$ and $e_2f_2$, respectively, a point e and a point f are respectively intersection points of a circle C with a straight line La and a straight line Lb, a connecting point between the mechanical spring (6) and the connector (4) or the lower connecting arm (3) is taken as a center of circle of the circle C, a length L1 of the mechanical spring (6) when the connector (4) is at a preset maximum height is taken as a radius of the circle C, and the straight lines La and Lb are respectively straight lines where the mechanical spring (6) is located when an included angle b between the mechanical spring (6) and the upper connecting arm (2) or the lower connecting arm (3) is at a maximum value and a minimum value, **characterized in that** the first end of the mechanical spring (6) us hinged with the connector (4) and the lower connecting arm (3).

3.  The display support having freely adjustable height as claimed in any of claims 1-2, wherein an included angle between the threaded rod (8) and a horizontal direction away from the connector (4) is 0-80° .

4.  The display support having freely adjustable height as claimed in any of claims 1-2, wherein when the connector (4) is at a preset maximum height, a length $L_1$ of the mechanical spring (6) is set to be L-x, wherein L represents a distance from a connecting point between the mechanical spring (6) and the connector (4) or the lower connecting arm (3) to the hinge point B between the lower connecting arm (3) and the base (1), and x is -10 mm to 30 mm.

5. The display support having freely adjustable height as claimed in any of claims 1-2, wherein when the connector (4) is maintained at any horizontal height within a preset height range, according to a maximum value and a minimum value of a preset weight range of the display, a maximum value and a minimum value of an included angle b between the mechanical spring (6) and the upper connecting arm (2) or the lower connecting arm (3) are obtained.

6. The display support having freely adjustable height as claimed in any of claims 1-2, wherein an elastic coefficient K of the mechanical spring (6) is Kmin to Kmax, wherein Kmax-Kmin≤15, and Kmin and Kmax are obtained by the following formula:

$$K=(\frac{G\cos(a1)}{\sin(b1)}-\frac{G\cos(a2)}{\sin(b2)})/(L1-L1')$$

wherein G represents a weight of the display;
a1 and a2 represent respectively angles between the upper connecting arm (2) or the lower connecting arm (3) and a horizontal plane when the connector (4) is at two arbitrary heights within a preset height range;
b1 and b2 represent included angles between the mechanical spring (6) and the upper connecting arm or the lower connecting arm (3), corresponding respectively to a1 and a2; and
L1 and L1' represent lengths of the mechanical spring (6), corresponding respectively to a1 and a2.

7. The display support having freely adjustable height as claimed in any of claims 1-2, wherein an end of the threaded rod (8) is configured as an operating end, and an other end of the threaded rod (8) is rotatably arranged in a mounting seat, so that the threaded rod (8) is driven to rotate by applying a force to the operating end of the threaded rod (8).

8. The display support having freely adjustable height as claimed in any of claims 1-2, wherein the mechanical spring (6) comprises an adjusting rod (10), an end of the adjusting rod (10) is hinged with the connector (4) and the lower connecting arm (3), an other end of the adjusting rod (10) is in threaded connection with an end of a main body of the mechanical spring (6), and when an end part of the adjusting rod (10) is operated to drive the adjusting rod (10) to rotate, the mechanical spring (6) is driven to be extended and compressed, so as to adjust an elastic force of the mechanical spring (6) and adapt to a display within a preset weight range.


**Patentansprüche**

1. Displayträger mit frei einstellbarer Höhe, wobei der Displayträger eine Basis (1) und einen Verbinder (4) zum Installieren eines Displays umfasst, wobei ein oberer Verbindungsarm (2) und ein unterer Verbindungsarm (3), die parallel zueinander sind, zwischen der Basis (1) und dem Verbinder (4) angeordnet sind und eine viereckige Struktur (ABDC) aus einem Scharnierpunkt C zwischen dem oberen Verbindungsarm (2) und dem Verbinder (4), dem Verbinder (4), einem Scharnierpunkt D zwischen dem unteren Verbindungsarm (3) und dem Verbinder (4), dem unteren Verbindungsarm (3), einem Scharnierpunkt B zwischen dem unteren Verbindungsarm (3) und der Basis (1), der Basis (1), einem Scharnierpunkt A zwischen dem oberen Verbindungsarm (2) und der Basis (1), und dem oberen Verbindungsarm (2) gebildet ist; und

wobei der Displayträger ferner eine mechanische Feder (6) umfasst, wobei ein erstes Ende der mechanische Feder (6) gelenkig mit dem Verbinder (4) und ein anderes Ende der mechanische Feder (6) gelenkig mit einem Gewindeschieber (7) verbunden ist, wobei der Gewindeschieber (7) auf einer Gewindestange (8) aufgesteckt ist, die in der Basis (1) angeordnet ist, sodass der Gewindeschieber (7) entlang der Gewindestange (8) verschiebbar ist, wenn ein Endstück der Gewindestange (8) betätigt wird, um die Gewindestange (8) zur Drehung anzutreiben, und die Position des Gewindeschiebers (7) auf der Gewindestange (8) abhängig von Gewicht des Displays auf dem Verbinder (4) einstellbar ist, sodass der Verbinder (4) in unterschiedlichen Höhen relativ zur Basis (1) angehalten werden kann, wenn der Verbinder (4) auf oder ab bewegt wird;
wobei der Displayträger eine erste und eine zweite Gleichgewichtsbedingung erfüllt, wobei die erste Gleichgewichtsbedingung darin besteht, den Verbinder (4) in einer beliebigen Höhe innerhalb eines vorgegebenen Höhenbereichs zu halten, den Gewindeschieber (7) durch Drehantrieb der Gewindestange (8) zu verschieben, und sicherzustellen, dass zur Anpassung an ein Display mit beliebigem Gewicht innerhalb eines vorgegebenen Gewichtsbereichs ein Gravitationsdrehmoment M1 gleich einem Elastizitätsdrehmoment M2 ist; wobei die zweite Gleichgewichtsbedingung darin besteht, gemäß der ersten Gleichgewichtsbedingung eine dem Gewicht des Displays entsprechende Position des Gewindeschiebers (7) auf der Gewindestange (8) beizubehalten und bei beliebiger Änderung der Höhe des Verbinders (4) innerhalb des vorgegebenen Höhenbereichs sicherzustellen, dass das Gravitationsdrehmoment M1 gleich dem Elastizitätsdrehmoment M2 ist, sodass der Verbinder (4) in verschiedenen Höhen relativ zur Basis (1) angehalten werden kann.

2. Displayträger mit frei einstellbarer Höhe nach Anspruch 1, wobei die Gewindestange (8) so konfiguriert ist, dass sie mit einer Bewegungsbahn des Gewindeschiebers (7) übereinstimmt, wobei die Bewegungsbahn des Gewindeschiebers (7) ein Liniensegment ist, das durch Verbinden eines Punkts $e_0$ und eines Punkts $f_0$ innerhalb eines Bereichs eines Vierecks $e_1f_1f_2e_2$ gebildet ist, wobei der Bereich des Vierecks $e_1f_1f_2e_2$ durch Parallelverschieben eines Liniensegments ef nach oben und unten um 5 mm in eine Richtung senkrecht zum Liniensegment ef gebildet ist, um jeweils Liniensegmente $e_1f_1$ und $e_2f_2$ zu erhalten, wobei ein Punkt e und ein Punkt f jeweils Schnittpunkte eines Kreises C mit einer Geraden La und einer Geraden Lb sind, wobei ein Verbindungspunkt zwischen der mechanischen Feder (6) und dem Verbinder (4) oder dem unteren Verbindungsarm (3) der Kreismittelpunkt des Kreises C ist, eine Länge L1 der mechanischen Feder (6), wenn sich der Verbinder (4) in einer vorgegebenen maximalen Höhe befindet, der Radius des Kreises C ist, und die Geraden La und Lb jeweils gerade Linien sind, auf denen sich die mechanische Feder (6) befindet, wenn ein eingeschlossener Winkel b zwischen der mechanischen Feder (6) und dem oberen Verbindungsarm (2) oder dem unteren Verbindungsarm (3) einen Maximal- und einen Minimalwert aufweist, **dadurch gekennzeichnet, dass** das erste Ende der mechanischen Feder (6) gelenkig mit dem Verbinder (4) und dem unteren Verbindungsarm (3) verbunden ist.

3. Displayträger mit frei einstellbarer Höhe nach einem der Ansprüche 1-2, wobei ein eingeschlossener Winkel zwischen der Gewindestange (8) und einer horizontalen Richtung weg vom Verbinder (4) 0-80° beträgt.

4. Displayträger mit frei einstellbarer Höhe nach einem der Ansprüche 1-2, wobei, wenn sich der Verbinder (4) in einer vorgegebenen Maximalhöhe befindet, eine Länge $L_1$ der mechanischen Feder (6) auf L-x eingestellt ist, wobei L einen Abstand von einem Verbindungspunkt zwischen der mechanischen Feder (6) und dem Verbinder (4) oder dem unteren Verbindungsarm (3) zum Scharnierpunkt B zwischen dem unteren Verbindungsarm (3) und der Basis (1) darstellt, und x zwischen -10 mm und 30 mm liegt.

5. Displayträger mit frei einstellbarer Höhe nach einem der Ansprüche 1-2, wobei, wenn der Verbinder (4) in einer beliebigen horizontalen Höhe innerhalb eines vorgegebenen Höhenbereichs beibehalten wird, entsprechend einem Maximal- und einem Minimalwert eines vorgegebenen Gewichtsbereichs des Displays, ein Maximal- und ein Minimalwert eines eingeschlossenen Winkels b zwischen der mechanischen Feder (6) und dem oberen Verbindungsarm (2) oder dem unteren Verbindungsarm (3) erhalten werden.

6. Displayträger mit frei einstellbarer Höhe nach einem der Ansprüche 1-2, wobei der Elastizitätskoeffizient K der mechanischen Feder (6) Kmin bis Kmax beträgt, wobei Kmax-Kmin≤15 ist, und Kmin und Kmax durch die folgende Formel berechnet werden:

$$K=(\frac{Gcos(a1)}{sin(b1)}-\frac{Gcos(a2)}{sin(b2)})/(L1-L1')$$

wobei G das Gewicht des Displays darstellt;
wobei a1 und a2 jeweils Winkel zwischen dem oberen Verbindungsarm (2) oder dem unteren Verbindungsarm (3) und einer horizontalen Ebene darstellen, wenn sich der Verbinder (4) in zwei beliebigen Höhen innerhalb eines vorgegebenen Höhenbereichs befindet;
wobei b1 und b2 eingeschlossene Winkel zwischen der mechanischen Feder (6) und dem oberen Verbindungsarm oder dem unteren Verbindungsarm (3) darstellen, die jeweils a1 und a2 entsprechen; und
wobei L1 und L1' Längen der mechanischen Feder (6) darstellen, die jeweils a1 und a2 entsprechen.

7. Displayträger mit frei einstellbarer Höhe nach einem der Ansprüche 1-2, wobei ein Ende der Gewindestange (8) als Betätigungsende ausgebildet ist und ein anderes Ende der Gewindestange (8) drehbar in einer Montageaufnahme angeordnet ist, sodass die Gewindestange (8) durch Krafteinwirkung auf das Betätigungsende der Gewindestange (8) zur Drehung angetrieben wird.

8. Displayträger mit frei einstellbarer Höhe nach einem der Ansprüche 1-2, wobei die mechanische Feder (6) eine Einstellstange (10) umfasst, ein Ende der Einstellstange (10) gelenkig mit dem Verbinder (4) und dem unteren Verbindungsarm (3) verbunden ist, ein anderes Ende der Einstellstange (10) in Gewindeverbindung mit einem Ende eines Hauptkörpers der mechanischen Feder (6) steht, und wenn ein Endstück der Einstellstange (10) betätigt wird, um die Einstellstange (10) zur Drehung anzutreiben, die mechanische Feder (6) zur Dehnung und Stauchung angetrieben wird, um so eine elastische Kraft der mechanischen Feder (6) einzustellen und sie an ein Display innerhalb eines vorgegebenen Gewichtsbereichs anzupassen.

**Revendications**

1. Un support d'affichage à hauteur librement réglable, dans lequel le support d'affichage comprenant une base (1) et un connecteur (4) destiné à installer un affichage, dans lequel un bras de liaison supérieur (2) et un bras de liaison inférieur (3), parallèles l'un à l'autre, étant disposés entre la base (1) et le connecteur (4), et une structure quadrilatérale (ABDC) étant formée entre un point de charnière C entre le bras de liaison supérieur (2) et le connecteur (4), le connecteur (4), un point de charnière D entre le bras de liaison inférieur (3) et le connecteur (4), le bras de liaison inférieur (3), un point de charnière B entre le bras de liaison inférieur (3) et la base (1), la base (1), un point de charnière A entre le bras de liaison supérieur (2) et la base (1), et le bras de liaison supérieur (2) ; et

   le support d'affichage comprenant en outre un ressort mécanique (6), dans lequel une première extrémité du ressort mécanique (6) étant articulée avec le connecteur (4), l'autre extrémité du ressort mécanique (6) étant articulée avec un bloc coulissant fileté (7), le bloc coulissant fileté (7) étant monté sur une tige filetée (8), la tige filetée (8) étant disposée dans la base (1), de sorte que lorsqu'une extrémité de la tige filetée (8) est actionnée pour entraîner la rotation de la tige filetée (8), le bloc coulissant fileté (7) peut se déplacer le long de la tige filetée (8), et la position du bloc coulissant fileté (7) sur la tige filetée (8) peut être ajustée en fonction du poids de l'affichage sur le connecteur (4), de sorte que lorsque le connecteur (4) est déplacé vers le haut ou vers le bas, le connecteur (4) peut être arrêté à différentes hauteurs par rapport à la base (1) ;
   dans lequel le support d'affichage satisfaisant une première condition d'équilibre et une seconde condition d'équilibre, dans lequella première condition d'équilibre étant : maintenir le connecteur (4) à n'importe quelle hauteur dans une plage de hauteur prédéfinie, entraîner le déplacement du bloc coulissant fileté (7) en entraînant la rotation de la tige filetée (8), et garantir qu'un couple gravitationnel M1 est égal à un couple élastique M2, afin de s'adapter à un affichage de n'importe quel poids dans une plage de poids prédéfinie ; la seconde condition d'équilibre étant : selon la première condition d'équilibre, maintenir la position du bloc coulissant fileté (7) sur la tige filetée (8) correspondant au poids de l'affichage, et lorsque la hauteur du connecteur (4) est modifiée arbitrairement dans la plage de hauteur prédéfinie, garantir que le couple gravitationnel M1 est égal au couple élastique M2, de sorte que le connecteur (4) puisse être arrêté à différentes hauteurs par rapport à la base (1).

2. Le support d'affichage à hauteur librement réglable selon la revendication 1, dans lequel la tige filetée (8) est configurée pour être cohérente avec une trajectoire de déplacement du bloc coulissant fileté (7), la trajectoire de déplacement du bloc coulissant fileté (7) étant un segment de ligne formée en reliant un point $e_0$ et un point $f_0$ dans une plage d'un quadrilatère $e_1f_1f_2e_2$, la plage du quadrilatère $e_1f_1f_2e_2$ étant formée en translatant un segment de ligne ef vers le haut et vers le bas de 5 mm dans une direction perpendiculaire au segment de ligne ef pour obtenir respectivement les segments de ligne $e_1f_1$ et $e_2f_2$, un point e et un point f étant respectivement les points d'intersection d'un cercle C avec une ligne droite La et une ligne droite Lb, un point de liaison entre le ressort mécanique (6) et le connecteur (4) ou le bras de liaison inférieur (3) étant pris comme centre du cercle C, une longueur L1 du ressort mécanique (6) lorsque le connecteur (4) est à une hauteur maximale prédéfinie étant prise comme rayon du cercle C, et les lignes droites La et Lb étant respectivement les lignes droites sur lesquelles se trouve le ressort mécanique (6) lorsque l'angle b entre le ressort mécanique (6) et le bras de liaison supérieur (2) ou le bras de liaison inférieur (3) est à une valeur maximale et à une valeur minimale, **caractérisé en ce que** la première extrémité du ressort mécanique (6) est articulée avec le connecteur (4) et le bras de liaison inférieur (3).

3. Le support d'affichage à hauteur librement réglable selon l'une quelconque des revendications 1 à 2, dans lequel un angle compris entre la tige filetée (8) et une direction horizontale s'éloignant du connecteur (4) est de 0 à 80°.

4. Le support d'affichage à hauteur librement réglable selon l'une quelconque des revendications 1 à 2, dans lequel, lorsque le connecteur (4) est à une hauteur maximale prédéfinie, une longueur $L_1$ du ressort mécanique (6) est définie comme étant L-x, L représentant une distance d'un point de liaison entre le ressort mécanique (6) et le connecteur (4) ou le bras de liaison inférieur (3) au point de charnière B entre le bras de liaison inférieur (3) et la base (1), et x étant de -10 mm à 30 mm.

5. Le support d'affichage à hauteur librement réglable selon l'une quelconque des revendications 1 à 2, dans lequel, lorsque le connecteur (4) est maintenu à n'importe quelle hauteur horizontale dans une plage de hauteur prédéfinie, selon une valeur maximale et une valeur minimale d'une plage de poids prédéfinie de l'affichage, une valeur maximale et une valeur minimale d'un angle b entre le ressort mécanique (6) et le bras de liaison supérieur (2) ou le bras de liaison inférieur (3) sont obtenues.

6. Le support d'affichage à hauteur librement réglable selon l'une quelconque des revendications 1 à 2, dans lequel un coefficient d'élasticité K du ressort mécanique (6) est de Kmin à Kmax, dans lequel Kmax-Kmin≤15, et Kmin et Kmax sont obtenus par la formule suivante :

$$K=(\frac{G\cos(a1)}{\sin(b1)}-\frac{G\cos(a2)}{\sin(b2)})/(L1-L1')$$

dans lequel G représente un poids de l'affichage ;
a1 et a2 représentent respectivement les angles entre le bras de liaison supérieur (2) ou le bras de liaison inférieur (3) et un plan horizontal lorsque le connecteur (4) est à deux hauteurs quelconques dans une plage de hauteur prédéfinie ;
b1 et b2 représentent les angles entre le ressort mécanique (6) et le bras de liaison supérieur (2) ou le bras de liaison inférieur (3), correspondant respectivement à a1 et a2 ; et
L1 et L1' représentent les longueurs du ressort mécanique (6), correspondant respectivement à a1 et a2.

7. Le support d'affichage à hauteur librement réglable selon l'une quelconque des revendications 1 à 2, dans lequel une extrémité de la tige filetée (8) est configurée comme une extrémité d'opération, et l'autre extrémité de la tige filetée (8) est disposée de manière rotative dans un siège de montage, de sorte que la tige filetée (8) est entraînée en rotation par l'application d'une force à l'extrémité d'opération de la tige filetée (8).

8. Le support d'affichage à hauteur librement réglable selon l'une quelconque des revendications 1 à 2, dans lequel le ressort mécanique (6) comprend une tige de réglage (10), une extrémité de la tige de réglage (10) étant articulée avec le connecteur (4) et le bras de liaison inférieur (3), l'autre extrémité de la tige de réglage (10) étant en liaison filetée avec une extrémité d'un corps principal du ressort mécanique (6), et lorsqu'une extrémité de la tige de réglage (10) est actionnée pour entraîner la rotation de la tige de réglage (10), le ressort mécanique (6) est entraîné à s'étendre et à se comprimer, de manière à ajuster une force élastique du ressort mécanique (6) et à s'adapter à un affichage dans une plage de poids prédéfinie.

Fig. 1

Fig. 2

Fig. 3

Fig. 4

Fig. 5

Fig. 6

Fig. 7

Fig. 8

Fig. 9

Fig. 10

Fig. 11a

Fig. 11b

Fig. 12a

Fig. 12b

## EP 4 108 973 B1

**REFERENCES CITED IN THE DESCRIPTION**

**Patent documents cited in the description**

- US 2007040084 A1